# EUROPÄISCHE PATENTSCHRIFT

(11) **EP 2 334 535 B1**
(45) Veröffentlichungstag und Bekanntmachung des Hinweises auf die Patenterteilung: **17.10.2012**
(21) Anmeldenummer: 09783479.0
(22) Anmeldetag: 28.09.2009
(51) Int. Cl.: B61L 3/12, B61L 25/02, B61L 3/00, G01S 11/06, G01S 13/82

(54) **VERFAHREN UND VORRICHTUNG ZUR ERHÖHUNG DER HALTEGENAUIGKEIT EINES BEWEGTEN OBJEKTES**
METHOD AND DEVICE FOR INCREASING THE STOPPING ACCURACY OF A MOVING OBJECT
PROCÉDÉ ET DISPOSITIF POUR ACCROÎTRE LA PRÉCISION D'ARRÊT D'UN OBJET DÉPLACÉ

(30) Priorität: 09.10.2008 DE 102008050764
(43) Veröffentlichungstag der Anmeldung: 22.06.2011
(73) Patentinhaber: Siemens Aktiengesellschaft, 80333 München (DE)
(72) Erfinder: BOCK, Ulrich, 38124 Braunschweig (DE); EVERS, Bernhard, 38116 Braunschweig (DE); KALUSCHA, Uwe, 38350 Helmstedt (DE); RADLOFF, Jürgen, 29355 Beedenbostel (DE); RAHN, Karsten, 38162 Cremlingen (DE); RICHTER, Olaf, 13591 Berlin (DE); SCHNIEDER, Lars, 38104 Braunschweig (DE)
(86) Internationale Anmeldenummer: PCT/EP2009/062520
(87) Internationale Veröffentlichungsnummer: WO 2010/040654

(56) Entgegenhaltungen:
- EP-A1- 1 724 178
- EP-A1- 1 863 190
- WO-A1-95/01900
- WO-A1-2006/099148
- WO-A1-2007/107747
- WO-A2-99/58388
- WO-A2-2006/029949
- DE-A1- 4 102 812
- DE-U1-202006 020 100
- GB-A- 2 424 288

## Beschreibung

Die Erfindung betrifft ein Verfahren und eine Vorrichtung zur Erhöhung der Haltegenauigkeit eines bewegten Objektes, insbesondere eines Schienenfahrzeuges, an einem vorgegebenen Haltepunkt.

Die nachfolgende Beschreibung bezieht sich im Wesentlichen auf das exakte Anfahren des optimalen Haltepunktes für ein Schienenfahrzeug im Bahnhofsbereich, ohne dass die Erfindung auf diese spezielle Anwendung beschränkt ist. Vielmehr ist eine Anzahl von Anwendungen denkbar, bei denen ein beliebiges bewegtes Objekt an einem bestimmten Haltepunkt zum Stillstand kommen soll, beispielsweise Materialzuführung im Produktionsprozess.

Bei modernen Zugsystemen, insbesondere solchen mit hohem Fahrgastaufkommen und/oder automatischem Zugbetrieb, d. h. mit wenig oder gänzlich ohne Zug- und Bahnsteigpersonal, ist es üblich geworden, die Fahrgäste auf den Bahnsteig vor einem einfahrenden Zug durch Bahnsteigtüren zu schützen. Am Bahnsteigrand befindet sich dazu eine mit Türen versehene Wand. Gefahren durch den einfahrenden Zug sowie Belästigungen der Fahrgäste durch den entstehenden Luftzug, Geräusche etc. können auf diese Weise ausgeschlossen oder vermindert werden. Außerdem ergibt sich dadurch die Möglichkeit der Klimatisierung des Haltestellenbereiches. Nachdem der eingefahrene Zug exakt vor den Bahnsteigtüren zum Stillstand gekommen ist, werden die Bahnsteigtüren zusammen mit den Fahrzeugtüren geöffnet und vor der Abfahrt des Zuges wieder geschlossen. Der Haltegenauigkeit des Zuges kommt hierbei eine große Bedeutung zu.

Probleme treten außerdem bei defekten Bahnsteigtüren oder/und Fahrzeugtüren auf. Bei bislang im Einsatz befindlichen Lösungen wird nämlich eine Bahnsteigtür auch dann geöffnet, wenn die gegenüberliegende Fahrzeugtür defekt ist, bzw. die Fahrzeugtür wird auch dann geöffnet, wenn die gegenüberliegende Bahnsteigtür defekt ist. In beiden Fällen ist es denkbar, dass Personen in den Gefahrenbereich zwischen Zug und Bahnsteigtüren gelangen können und es zu Unfällen kommen kann.

Weiterhin ist zu berücksichtigen, dass üblicherweise Züge unterschiedlicher Zuglängen eingesetzt werden. Bei Einfahrt eines Kurzzuges muss dementsprechend nur ein Teil der Bahnsteigtüren zwecks Öffnung derselben angesteuert werden.

Üblicherweise wird die Haltegenauigkeit am Bahnsteig durch gleisseitige, punktförmig wirkende Übertragungseinrichtungen erhöht. Diese dienen als Ortsreferenzpunkte, zu denen sich das Schienenfahrzeug relativ ortet. Diese Ortsreferenzpunkte müssen mit höchster Präzision festgelegt werden. Aufgrund der örtlichen Gegebenheiten kann die erforderliche Präzision jedoch nicht immer gewährleistet werden. Darüber hinaus kann es bei der Selbstortung des Schienenfahrzeugs mittels gleisseitiger Ortungsreferenzpunkte, beispielsweise Balisen, aufgrund akkumulierter Ortungsungenauigkeiten - Drift - zu Erkennungsschwierigkeiten von Balisen kommen. Wenn eine erwartete Balise nicht im vermuteten Erwartungsfenster geortet wurde, fällt das Fahrzeug aus einer automatischen Bremskurvenüberwachung heraus und der Triebfahrzeugführer muss das Fahrzeug manuell auf den betrieblichen Haltepunkt steuern.

Aus der DE 41 02 812 A1 ist eine Einrichtung zum Feinpositionieren von Schienenfahrzeugen bekannt, die eine sich verengende Leiterschleife verwendet.

Der Erfindung liegt die Aufgabe zugrunde, ein Verfahren und eine Vorrichtung anzugeben, die ein präzises Anfahren des Haltepunktes ermöglichen. Weiterhin ist eine einfache Koordinierbarkeit verfügbarer Fahrzeug- und Bahnsteigtüren anzustreben.

Verfahrensgemäß wird die Aufgabe dadurch gelöst, dass ein haltepunktseitig erzeugtes RFID (Radio Frequency Identification)-Signal objektseitig empfangen und als Führungsgröße zur Annäherung an den Haltepunkt verwendet wird.

Eine Vorrichtung zur Durchführung des Verfahrens gemäß Anspruch 4 weist dazu einen dem Haltepunkt zugeordneten RFID-Transponder und einen dem Objekt zugeordneten RFID-Reader sowie Mittel zur Bestimmung einer Bremskurve in Abhängigkeit von dem empfangenen RFID-Signal auf.

Auf ein Schienenfahrzeug bezogen ist fahrzeugseitig der RFID-Reader installiert, wobei die empfangenen Informationen zur Auswertung an ein Fahrzeuggerät weitergeleitet werden. Der dem Haltepunkt zugeordnete RFID-Transponder erzeugt kontinuierlich ein RFID-Signal, dessen Laufzeit dem Schienenfahrzeug als Führungsgröße zur Annäherung an den vorgesehen Haltepunkt dient. Das Fahrzeuggerät berechnet und überwacht die ermittelte Bremskurve anhand der abstands- und geschwindigkeitsspezifischen RFID-Informationen, wobei im Gegensatz zur herkömmlichen Balisenortung hochgenaue, hochverfügbare und zuverlässige Berechnungsgrundlagen zur Verfügung stehen. Das RFID-Signal wird kontinuierlich und drahtlos in Form eines elektromagnetischen Hochfrequenzfeldes geringer Reichweite gesendet, wobei zusätzlich der Reader mit Energie versorgt werden kann. Aus der Laufzeit des RFID-Signals lässt sich ein sehr präzises Abstandsäquivalent erzeugen, während sich die Relativgeschwindigkeit aus der dopplereffektbedingten Frequenzverschiebung ergibt.

Neben der Erhöhung der Haltegenauigkeit besteht ein weiterer Vorteil gegenüber herkömmlichen Systemen in der einfachen Nachrüstbarkeit der Fahrzeuge und der Bahnsteighaltepunkte.

Gemäß Anspruch 2 wird das von einem Schienenfahrzeug empfangene RFID-Signal nach Erreichen des Haltepunktes benutzt, um ein Öffnungskommando für Fahrzeugtüren und/oder Bahnsteigtüren zu erzeugen. Die erhöhte Haltegenauigkeit ermöglicht die direkte Türenansteuerung ohne Zwischenschaltung weiterer Überprüfungsroutinen, beispielsweise visueller Art.

Zur weiteren Erhöhung der Sicherheit am Bahnsteig ist gemäß Anspruch 3 zusätzlich vorgesehen, dass das haltepunktseitig erzeugte RFID-Signal Bahnsteigtürenverfügbarkeitsdaten umfasst und fahrzeugseitig zum selektiven Öffnen der Fahrzeugtüren verwendet wird, und dass ein schienenfahrzeugseitig erzeugtes RFID-Signal, welches Fahrzeugtürenverfügbarkeitsdaten und Zuglängendaten umfasst, haltpunktseitig empfangen und zum selektiven Öffnen der Bahnsteigtüren verwendet wird.

Gemäß Anspruch 5 ist dazu eine Vorrichtung vorgesehen, bei der der haltepunktseitige RFID-Transponder zur Übertragung von Bahnsteigtürenverfügbarkeitsdaten an eine Fahrzeugtürensteuereinrichtung ausgebildet ist und ein fahrzeugseitiger RFID-Transponder zur Übertragung von Fahrzeugtürenverfügbarkeitsdaten und Zuglängendaten an eine Bahnsteigtürensteuereinrichtung ausgebildet ist.

Folgende Funktionen werden fahrzeugseitig übernommen:
- Einlesen der Zustandsdaten der einzelnen Fahrzeugtüren - intakt / defekt - von der Fahrzeugtürensteuereinrichtung in den RFID-Transponder des Fahrzeugs,
- Einlesen der Zuglänge aus Zugdaten eines Zugsicherungssystems oder Eingabe durch den Bediener in den RFID-Transponder des Fahrzeugs,
- Übertragung des RFID-Signals an den Haltepunkt,
- Empfang des haltepunktseitig erzeugten RFID-Signals mit Zustandsdaten der Bahnsteigtüren - intakt / defekt - und
- Generieren eines Befehls zur selektiven Öffnung der Fahrzeugtüren auf Basis der erhaltenen Zustandsdaten der einzelnen Bahnsteigtüren.

Folgende Funktionen werden haltepunktseitig übernommen:
- Einlesen der Zustandsdaten der einzelnen Bahnsteigtüren
- intakt / defekt - von der Bahnsteigtürensteuereinrichtung in den RFID-Transponder des Haltepunktes,
- Übertragung des RFID-Signals an das Fahrzeug,
- Empfang des fahrzeugseitig erzeugten RFID-Signals mit Zuglängendaten und Zustandsdaten der Fahrzeugtüren - intakt / defekt - und
- Generieren eines Befehls zur selektiven Öffnung der Bahnsteigtüren auf Basis der erhaltenen Zuglängendaten und Zustandsdaten der einzelnen Fahrzeugtüren.

Durch diese reziproke und türselektive Bahnsteigtür/Fahrzeugtür-Steuerung ergibt sich eine erhöhte Sicherheit im Haltestellenbereich, da keine Fahrgäste in den Gefahrraum zwischen Bahnsteigtür und Fahrzeugtür bzw. bei Kurzzügen in den Gleisbereich gelangen können.

Das System kann als zusätzliches Modul in bestehende Systeme integriert werden. Es dient somit als Rückfallebene zu bestehenden Zugsicherungssystemen mit kontinuierlicher bidirektionaler Datenübertragung. Steht der originäre Datenübertragungskanal nicht zur Verfügung, so kann die selektive Türfreigabe alternativ über den oben dargestellten RFID-Übertragungskanal erfolgen. Ein manuelles Öffnen der Bahnsteigtüren durch Betätigen eines Schlagtasters durch den Fahrzeugführer kann somit entfallen.

Das System kann aber auch als Stand-alone-System eingesetzt werden, insbesondere, wenn Bahnsteigtüren verwendet werden sollen, jedoch kein hochautomatisiertes Zugsicherungssystem vorhanden ist. In diesem Fall kann ebenfalls das Betätigen eines Schlagtasters durch den Fahrzeugführer entfallen.

Streckenseitig kann darüber hinaus eine Schnittstelle zu Diagnosesystemen eingerichtet werden, wobei sowohl Zustandsdaten der Fahrzeugtüren als auch Zustandsdaten der Bahnsteigtüren an zentrale Diagnose-Einrichtungen übertragen werden können.

Die Erfindung wird nachfolgend anhand figürlich dargestellter Ausführungsbeispiele erläutert. Es zeigen
- Figur 1: ein System zur Erhöhung der Haltegenauigkeit und
- Figur 2: ein System zur selektiven Türenöffnung.

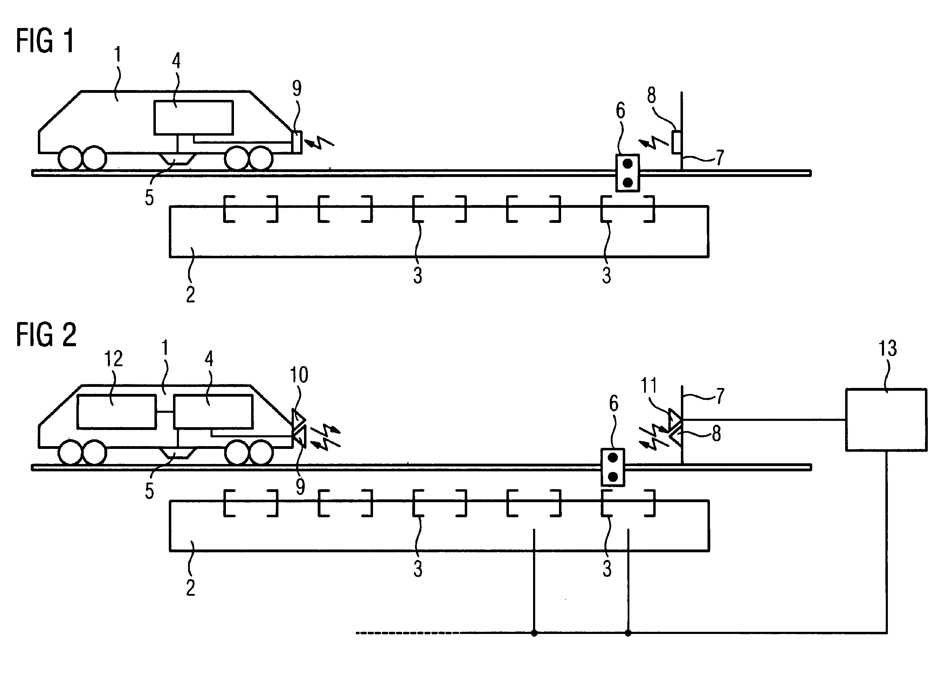

Figur 1 zeigt ein Schienenfahrzeug 1, das in einen Bahnsteig 2 mit Bahnsteigtüren 3 einfährt. Das Schienenfahrzeug 1 ist in üblicher Weise mit einem Fahrzeuggerät 4 ausgestattet, welches über eine Balisenantenne 5 mit streckenseitigen Balisen 6 zusammenwirkt. Die Baliseninformation wird beim Überfahren durch die Balisenantenne 5 gelesen und vom Fahrzeuggerät 4 ausgewertet, beispielsweise zur Ermittlung einer Bremskurve. Diese Funktion setzt voraus, dass die Balise 6 erwartet und damit überhaupt erkannt wird. Damit das Schienenfahrzeug 1 exakt an einem vorgegebenen Haltepunkt 7 zum Stillstand kommt, muss die Balise 6 außerdem extrem genau positioniert sein. Die Positionierung der Balise 6 ist jedoch stark von den örtlichen Gegebenheiten, insbesondere den Gleisbettverhältnissen, abhängig, so dass die erreichbare Haltegenauigkeit unter Umständen nicht ausreicht, damit Fahrzeugtüren und Bahnsteigtüren 3 zueinander fluchten. Der Triebfahrzeugführer muss dann manuell in den automatischen Bremsvorgang eingreifen. Bei fahrerlosen Systemen sind zusätzliche aufwändige technische Systeme zur Korrektur der Halteposition erforderlich. Um auf derartige Zusatzsysteme verzichten zu können und ggf. die Mitwirkung des Triebfahrzeugführers zu vermeiden, ist ein RFID-System vorgesehen. Ein RFID-Transponder 8 ist am Haltepunkt 7 angeordnet, wobei das von dem RFID-Transponder 8 kontinuierlich abgestrahlte elektromagnetische Hochfrequenzfeld von einem RFID-Reader 9 auf dem Schienenfahrzeug 1 bei Annäherung an den Haltepunkt 7 erkannt wird. Dieses RFID-System ermöglicht durch Laufzeitmessung eine hochgenaue Weg- und Geschwindigkeitsermittlung. Der verbleibende Abstand bis zum Haltepunkt 7 ist folglich bekannt. Das empfangene RFID-Signal wird an das Fahrzeuggerät 4 weitergeleitet und dort zur Berechnung und Überwachung einer optimalen Bremskurve in Abhängigkeit von der momentanen Geschwindigkeit verwendet.

Figur 2 veranschaulicht eine Konfiguration, die zusätzlich zur selektiven Öffnung der Bahnsteigtüren 3 und - nicht dargestellter - Fahrzeugtüren ausgebildet ist. Dazu ist in Erweiterung zu Figur 1 eine bidirektionale RFID-Signalübertragung zwischen dem Schienenfahrzeug 1 und dem Haltepunkt 7 eingerichtet. Auch das Schienenfahrzeug 1 ist mit einem RFID-Transponder 10 ausgestattet, der mit einem haltepunktseitigen RFID-Reader 11 zusammenwirkt. Über diese Datenverbindung werden von einer Fahrzeugtürensteuereinrichtdung 12 bereitgestellte Fahrzeugtürenverfügbarkeitsdaten sowie Zuglängendaten an eine haltepunktseitige Bahnsteigtürensteuereinrichtung 13 übertragen. Falls beispielsweise ein Kurzzug einfährt oder eine Fahrzeugtür defekt ist und sich nicht öffnen lässt, wird durch die Bahnsteigtürensteuereinrichtung 13 auch die fluchtend zugeordnete Bahnsteigtür nicht geöffnet. Analog werden mit Hilfe des RFID-Signals in Gegenrichtung, d. h. vom Haltepunkt 7 zum Schienenfahrzeug 1 Bahnsteigtürenverfügbarkeitsdaten an die Fahrzeugtürensteuereinrichtung 12 übertragen, welche dafür sorgt, dass am Haltepunkt 7 nur die Fahrzeugtüren geöffnet werden, denen funktionsfähige Bahnsteigtüren 3 zugeordnet sind.

In Abwandlung zur dargestellten Ausführungsform können haltepunktseitig der RFID-Reader 11 und der RFID-Transponder 8 vom Haltepunkt 7 beabstandet angeordnet werden. Dadurch ergibt sich immer eine eindeutige Entfernungsmessung, auch für den Fall, dass der Haltepunkt 7 überfahren wird.

## Patentansprüche

1. Verfahren zur Erhöhung der Haltegenauigkeit eines bewegten Objektes, insbesondere eines Schienenfahrzeuges (1), an einem vorgegebenen Haltepunkt (7),
**dadurch gekennzeichnet, dass** ein haltepunktseitig erzeugtes RFID (Radio Frequency Identification)-Signal objektseitig empfangen und als Führungsgröße zur Annäherung an den Haltepunkt (7) verwendet wird.

2. Verfahren nach Anspruch 1,
**dadurch gekennzeichnet, dass** das RFID-Signal von einem Schienenfahrzeug (1) empfangen wird, welches nach Erreichen des Haltepunktes (7) ein Öffnungskommando für Fahrzeugtüren und/oder Bahnsteigtüren (3) erzeugt.

3. Verfahren nach Anspruch 2,
**dadurch gekennzeichnet, dass** dass das haltepunktseitig erzeugte RFID-Signal Bahnsteigtürenverfügbarkeitsdaten umfasst und fahrzeugseitig zum selektiven Öffnen der Fahrzeugtüren verwendet wird, und dass ein schienenfahrzeugseitig erzeugtes RFID-Signal, welches Fahrzeugtürenverfügbarkeitsdaten und Zuglängendaten umfasst, haltpunktseitig empfangen und zum selektiven Öffnen der Bahnsteigtüren (3) verwendet wird.

4. Vorrichtung zur Durchführung des Verfahrens nach einem der vorangehenden Ansprüche,
**dadurch gekennzeichnet, dass** ein dem Haltepunkt (7) zugeordneter RFID-Transponder (8) und ein dem Objekt zugeordneter RFID-Reader (9) sowie Mittel zur Bestimmung einer Bremskurve in Abhängigkeit von dem empfangenen RFID-Signal vorgesehen sind.

5. Vorrichtung nach Anspruch 4,
**dadurch gekennzeichnet, dass** der haltepunktseitige RFID-Transponder (8) zur Übertragung von Bahnsteigtürenverfügbarkeitsdaten an eine Fahrzeugtürensteuereinrichtung (12) ausgebildet ist und dass ein fahrzeugseitiger RFID-Transponder (10) zur Übertragung von Fahrzeugtürenverfügbarkeitsdaten und Zuglängendaten an eine Bahnsteigtürensteuereinrichtung (13) ausgebildet ist.

## Claims

1. Method for increasing the stopping accuracy of a moving object, in particular of a rail vehicle (1) at a predetermined stopping point (7),
**characterized in that**
an RFID (Radio-Frequency Identification) signal which is produced at the stopping point end is received at the object end, and is used as a reference variable for approaching the stopping point (7).

2. Method according to Claim 1,
**characterized in that**
the RFID signal is received by a rail vehicle (1) and produces an opening command for vehicle doors and/or platform doors (3) after reaching the stopping point (7).

3. Method according to Claim 2,
**characterized in that**
the RFID signal which is produced at the stopping point end comprises platform door availability data and is used at the vehicle end for selectively opening the vehicle doors, and **in that** an RFID signal which is produced at the rail vehicle end and comprises vehicle door availability data and train length data is received at the stopping point end and is used for selectively opening the platform doors (3).

4. Apparatus for carrying out the method according to one of the preceding claims,
**characterized in that**
an RFID transponder (8) which is associated with the stopping point (7) and an RFID reader (9) which is associated with the object, as well as means for determining a braking curve are provided as a function of the received RFID signal.

5. Apparatus according to Claim 4,
**characterized in that**
the RFID transponder (8) at the stopping point end is designed to transmit platform door availability data to a vehicle door control device (12) and **in that** an RFID transponder (10) at the vehicle end is designed to transmit vehicle door availability data and train length data to a platform door control device (13).

## Revendications

1. Procédé d'augmentation de la précision d'arrêt d'un objet déplacé, notamment d'un véhicule ( 1 ) ferroviaire, en un point ( 7 ) d'arrêt prescrit,
**caractérisé en ce qu'**un signal RFID ( Radio Frequency Identification ), produit du côté du point d'arrêt, est reçu du côté de l'objet et est utilisé comme grandeur de guidage pour l'approche du point ( 7 ) d'arrêt.

2. Procédé suivant la revendication 1,
**caractérisé en ce que**
le signal RFID est reçu par un véhicule ( 1 ) ferroviaire, qui, après avoir atteint le point ( 7 ) d'arrêt, produit une instruction d'ouverture de porte du véhicule et/ou de porte ( 3 ) de quai.

3. Procédé suivant la revendication 2,
**caractérisé en ce que**
le signal RFID, produit du côté du point d'arrêt, comprend des données de disponibilité de portes d'accès au quai et est utilisé du côté du véhicule pour l'ouverture sélective des portes du véhicule et **en ce qu'**un signal RFID, produit du côté du véhicule ferroviaire et comprenant des données de disponibilité de portes du véhicule et des données de longueur de train, est reçu du côté du point d'arrêt et est utilisé pour l'ouverture sélective des portes ( 3 ) de quai.

4. Dispositif pour la mise en oeuvre du procédé suivant l'une des revendications précédentes,
**caractérisé en ce que**
il est prévu un transpondeur ( 8 ) RFID associé au point ( 7 ) d'arrêt et un lecteur ( 9 ) RFID associé à l'objet ainsi que des moyens de détermination d'une courbe de freinage en fonction du signal RFID reçu.

5. Dispositif suivant la revendication 4,
**caractérisé en ce que**
le transpondeur ( 8 ) RFID du côté du point d'arrêt est formé pour la transmission de données de disponibilité de portes d'accès au quai à un dispositif ( 12 ) de commande de portes de véhicule et **en ce qu'**un transpondeur ( 10 ) RFID du côté du véhicule est formé pour la transmission de données de disponibilité de portes de véhicule et de données de longueur de train à un dispositif ( 13 ) de commande de portes d'accès au quai.
